# EUROPEAN PATENT SPECIFICATION

(11) **EP 0 467 871 B1**
(45) Date of publication and mention of the grant of the patent: **20.08.1997**
(21) Application number: 91850175.0
(22) Date of filing: 24.06.1991
(51) Int. Cl.: E21B 10/22, F16J 15/32, C08L 9/02, C08L 15/00

(54) **O-ring seal for rock bit bearings**
O-Ring-Dichtung für die Lager von Gesteinsbohrmeisseln
Joint torique pour paliers de trépan de roche

(30) Priority: 11.07.1990 US 550965
(43) Date of publication of application: 22.01.1992
(73) Proprietor: SMITH INTERNATIONAL, INC., Houston, Texas 75032 (US)
(72) Inventor: Denton, Robert (NMI), Friendswood, Texas 77546 (US); Sinclair, James J., Huntington Beach, California 92646 (US)
(74) Representative: Henningsson, Gunnar

(56) References cited:
- EP-A- 0 163 971
- DE-C- 3 226 081
- US-A- 4 851 068

## Description

### Field of the Invention

This invention relates to an O-ring seal for retaining the lubricant around the journal bearings in a rock bit or drill bit for drilling oil wells or the like.

### Background of the Invention

Heavy-duty drill bits or rock bits are employed for drilling wells in subterranean formations for oil, gas, geothermal steam, and the like. Such drill bits have a body connected to a drill string and a plurality, typically three, of hollow cutter cones mounted on the body for drilling rock formations. The cutter cones are mounted on steel journals or pins integral with the bit body at its lower end. In use, the drill string and bit body are rotated in the bore hole, and each cone is caused to rotate on its respective journal as the cone contacts the bottom of the bore hole being drilled. As such a rock bit is used for drilling in hard, tough formations, high pressures and temperatures are encountered. The total useful life of a drill bit in such severe environments is in the order of 20 to 200 hours for bits in sizes of about 6-1/2 to 12-1/4 inch diameter at depths of about 5000 to 20,000 feet. Useful lifetimes of about 65 to 150 hours are typical.

When a drill bit wears out or fails as a bore hole is being drilled, it is necessary to withdraw the drill string for replacing the bit. The amount of time required to make a round trip for replacing a bit is essentially lost from drilling operations. This time can become a significant portion of the total time for completing a well, particularly as the well depths become great. It is therefore quite desirable to maximize the lifetime of a drill bit in a rock formation. Prolonging the time of drilling minimizes the lost time in "round tripping" the drill string for replacing bits.

Replacement of a drill bit can be required for a number of reasons, including wearing out or breakage of the structure contacting the rock formation. One reason for replacing the rock bits includes failure or severe wear of the journal bearings on which the cutter cones are mounted. These bearings are subject to very-high-pressure drilling loads, high hydrostatic pressures in the hole being drilled, and high temperatures due to drilling, as well as elevated temperatures in the formation being drilled. Considerable development work has been conducted over the years to produce bearing structures and to employ materials that minimize wear and failure of such bearings.

The journal bearings are lubricated with grease adapted to such severe conditions. Such lubricants are a critical element in the life of a rock bit. A successful grease should have a useful life longer than other elements of the bit so that premature failures of bearings do not unduly limit drilling. Failure of lubrication can be detected by generation of elevated pressure in the bit, evidence of which can often be found upon examination of a used bit. The high pressure is generated due to decomposition of oil in the grease, with consequent generation of gas when lubrication is deficient and a bearing overheats due to friction. Lubrication failure can be attributed to misfit of bearings or O-ring seal failure, as well as problems with a grease.

Pressure and temperature conditions in a drill bit can vary with the time as the drill bit is used. For example, when a "joint" of pipe is added to the drill string, weight on the bit can be relieved and slight flexing can occur. Such variations can result in "pumping" of the grease through O-ring seals, leading to loss of grease or introduction of foreign materials, such as drilling mud, that can damage bearing surfaces.

One of the consistent problems in drill bits is the inconsistency of lifetime. Sometimes bits last for long periods, whereas bits which are apparently identical operated under similar conditions may fail with a short lifetime. One cause of erratic lifetime is failure of the bearings. Bearing failure can often be traced to failure of the seal that retains lubricant in the bearing. Lubricant may be lost if the seal fails, or abrasive particles of rock may work their way into the bearing surfaces, causing excessive wear.

Rock bit O-rings are being called on to perform service in environments which are extremely harsh. Modern bits are being run at exceptionally high surface speeds, sometimes more than 500 feet per minute. One face of the O-ring is exposed to abrasive drilling mud. The life of the O-ring may be significantly degraded by the resultant high temperatures due to friction (as well as elevated temperature in the well bore) and abrasion.

It is therefore desirable to provide a consistently reliable O-ring seal for maintaining the lubricant within rock bits, that has a long useful life, is resistant to crude gasoline and other chemical compositions found within oil wells, has high heat resistance, is highly resistant to abrasion, and that will not readily deform under load and allow leakage of the grease from within the bit or drilling mud into the bit.

DE-C-3226081 discloses compositions for use seals,for instance, in conjunction with oil and gas wells. Such compositions comprise nitrile elastomers, furnace black, peroxide curing agent, zinc oxide or magnesium oxide and stearic acid.

EP-A-163971 discloses oil- and heat-resistant copolymer rubber compositions comprising tetrafluoroethylene.

### Brief Summary of the Invention

There is provided, in practice of the present invention according to a preferred embodiment, an O-ring seal composition for retaining the lubricant around rock bit bearings used for drilling subterranean formations comprising 100 parts by weight of 96% saturated nitrile elastomer, furnace black in the range of from 40 to 70 parts by weight, peroxide curing agent in the range of from 7 to 10 parts by weight, zinc oxide or magnesium oxide in the range of from 4 to 7 parts by weight, stearic acid in the range of from 0.5 to 2 parts by weight, tetrafluoroethylene particles in the range of from 0 to 15 parts by weight, and a fatty acid amide selected from the group containing saturated or unsaturated fatty acid amides 15 to 25 carbon atoms in length in the range of from 0 to 8 parts by weight.

Such an O-ring seal has a tensile strength of at least 3000 psi, elastic modulus at 100% elongation in the range of from 850 to 1150 psi, elongation at breakage in the range of from 200 to 350%, durometer hardness in the range of from 74 to 80 Shore A, die C tear strength of at least 250 pounds per inch, and compression set after 70 hours at 100°C of no more than 16%.

### Brief Description of the Drawings

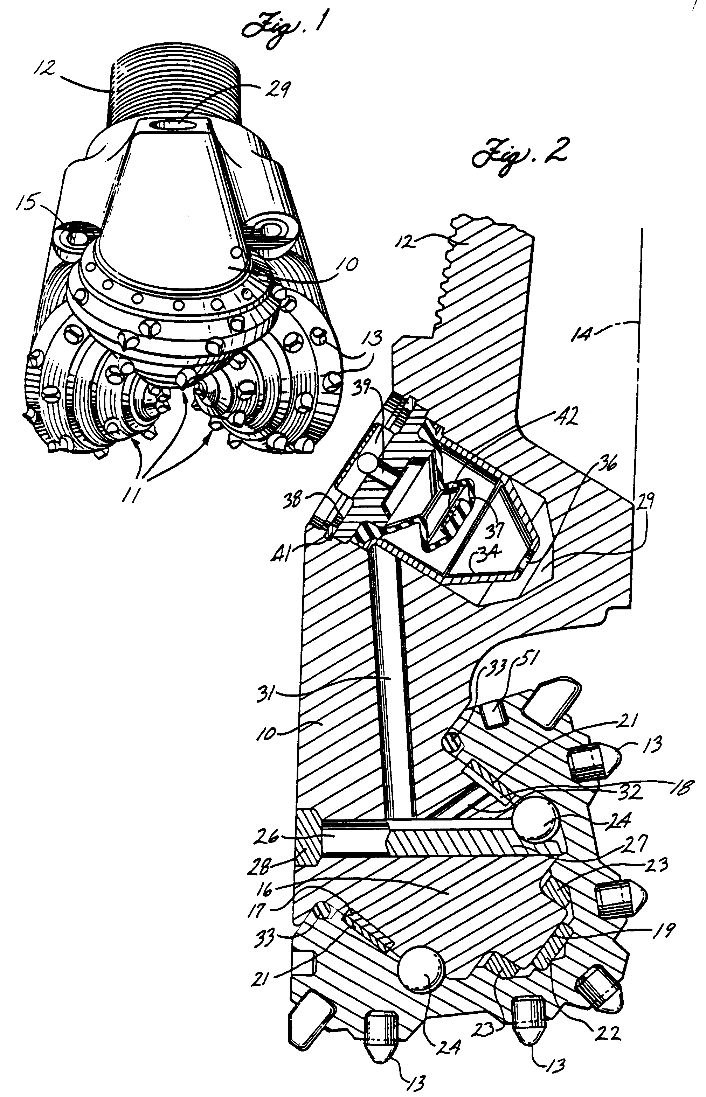

A rock bit containing such an O-ring seal is illustrated in semi-schematic perspective in FIG. 1 and in a partial cross section in FIG. 2.

### Detailed Description

A rock bit employing an O-ring seal comprises a body 10 having three cutter cones 11 mounted on its lower end. A threaded pin 12 is at the upper end of the body for assembly of the rock bit onto a drill string for drilling oil wells or the like. A plurality of tungsten carbide inserts 13 are pressed into holes in the surfaces of the cutter cones for bearing on the rock formation being drilled. Nozzles 15 in the bit body introduce drilling mud into the space around the cutter cones for cooling and carrying away formation chips drilled by the bit.

FIG. 2 is a fragmentary, longitudinal cross-section of the rock bit, extending radially from the rotational axis 14 of the rock bit through one of the three legs on which the cutter cones 11 are mounted. Each leg includes a journal pin 16 extending downwardly and radially inwardly on the rock bit body. The journal pin includes a cylindrical bearing surface having a hard metal insert 17 on a lower portion of the journal pin. The hard metal insert is typically a cobalt or iron-base alloy welded in place in a groove on the journal leg and having a substantially greater hardness than the steel forming the journal pin and rock bit body. An open groove 18 corresponding to the insert 17 is provided on the upper portion of the journal pin. Such a groove may, for example, extend around 60% or so of the circumference of the journal pin, and the hard metal 17 can extend around the remaining 40% or so. The journal pin also has a cylindrical nose 19 at its lower end.

Each cutter cone 11 is in the form of a hollow, generally-conical steel body having tungsten carbide inserts 13 pressed into holes on the external surface. For long life, the inserts may be tipped with a polycrystalline diamond layer. Such tungsten carbide inserts provide the drilling action by engaging a subterranean rock formation as the rock bit is rotated. Some types of bits have hard-faced steel teeth milled on the outside of the cone instead of carbide inserts.

The cavity in the cone contains a cylindrical bearing surface including an aluminum bronze insert 21 deposited in a groove in the steel of the cone or as a floating insert in a groove in the cone. The aluminum bronze insert 21 in the cone engages the hard metal insert 17 on the leg and provides the main bearing surface for the cone on the bit body. A nose button 22 is between the end of the cavity in the cone and the nose 19 and carries the principal thrust loads of the cone on the journal pin. A bushing 23 surrounds the nose and provides additional bearing surface between the cone and journal pin.

Other types of bits, particularly for higher rotational speed applications, have roller bearings instead of the exemplary journal bearings illustrated herein.

A plurality of bearing balls 24 are fitted into complementary ball races in the cone and on the journal pin. These balls are inserted through a ball passage 26, which extends through the journal pin between the bearing races and the exterior of the rock bit. A cone is first fitted on the journal pin, and then the bearing balls 24 are inserted through the ball passage. The balls carry any thrust loads tending to remove the cone from the journal pin and thereby retain the cone on the journal pin. The balls are retained in the races by a ball retainer 27 inserted through the ball passage 26 after the balls are in place. A plug 28 is then welded into the end of the ball passage to keep the ball retainer in place.

The bearing surfaces between the journal pin and cone are lubricated by a grease composition. Preferably, the interior of the rock bit is evacuated, and grease is introduced through a fill passage (not shown). The grease thus fills the regions adjacent the bearing surfaces plus various passages and a grease reservoir, and air is essentially excluded from the interior of the rock bit. The grease reservoir comprises a cavity 29 in the rock bit body, which is connected to the ball passage 26 by a lubricant passage 31. Grease also fills the portion of the ball passage adjacent the ball retainer, the open groove 18 on the upper side of the journal pin, and a diagonally extending passage 32 therebetween. Grease is retained in the bearing structure by a resilient seal in the form of an O-ring 33 between the cone and journal pin. Preferably, the O-ring is in a slightly V-shaped groove.

A pressure compensation subassembly is included in the grease reservoir 29. This subassembly comprises a metal cup 34 with an opening 36 at its inner end. A flexible rubber bellows 37 extends into the cup from its outer end. The bellows is held in place by a cap 38 with a vent passage 39. The pressure compensation subassembly is held in the grease reservoir by a snap ring 41.

When the rock bit is filled with grease, the bearings, the groove 18 on the journal pin, passages in the journal pin, the lubrication passage 31, and the grease reservoir on the outside of the bellows 37 are filled with grease. If the volume of grease expands due to heating, for example, the bellows 37 is compressed to provide additional volume in the sealed grease system, thereby preventing accumulation of excessive pressures. High pressure in the grease system can damage the O-ring seal 33 and permit drilling mud or the like to enter the bearings. Such material is abrasive and can quickly damage the bearings. Conversely, if the grease volume should contract, the bellows can expand to prevent low pressures in the sealed grease systems, which could cause flow of abrasive and/or corrosive substances past the O-ring seal.

The bellows has a boss 42 at its inner end which can seat against the cap 38 at one end of the displacement of the bellows for sealing the vent passage 39. The end of the bellows can also seat against the cup 34 at the other end of its stroke, thereby sealing the opening 36. If desired, a pressure-relief check valve can also be provided in the grease reservoir for relieving over-pressures in the grease system that could damage the O-ring seal.

To maintain the desired properties of the O-ring seal at the pressure and temperature conditions that prevail in a rock bit, to inhibit "pumping" of the grease through the O-ring seal, and for a long useful life, it is important that the O-ring seal be resistant to crude gasoline and other chemical compositions found within oil wells, have high heat and abrasion resistance, have low rubbing friction, and will not readily deform and allow leakage of the grease from within the bit or drilling mud into the bit.

Therefore, it is desired that the O-ring seal have a low modulus of elasticity at 100% elongation of from 850 to 1150 psi, a minimum tensile strength of 3000 psi, elongation of from 200 to 350%, die C tear strength of at least 250 lb/in, durometer hardness Shore A of from 74 to 80, and a low compression set after 70 hours at 100°C of less than 18% and preferably less than 16%.

A variety of O-ring seals have been employed in such rock bits. Such O-rings typically comprise acrylonitrile polymers or acrylonitrile/butadiene copolymers. Other components in the polymers are activators or accelerators for the curing, such as stearic acid, and agents that add to heat resistance of the polymer, such as zinc oxide and curing agents. However, typically, these synthetic rubbers exhibit poor heat resistance and become brittle at elevated temperatures after extended periods of time. Additionally, such compounds often exhibit undesirably low tensile strength and high coefficients of friction. Such properties are undesirable for a seal in a rock bit, since the high operating temperatures of the bit result in frequent failure of the seal.

The O-ring seal of the present invention comprises a highly saturated nitrile (HSN) elastomer. The O-ring seal may be formulated to include a peroxide curing agent, furnace black, zinc oxide or magnesium oxide, and may also include tetrafluoroethylene (TFE), fatty acid amide, antioxidants, accelerators, plasticizers and processing aids.

The HSN elastomer confers on the O-ring seal the properties of elasticity, good chemical resistance, high mechanical strength, and good resistance to abrasion and elevated temperatures.

HSN elastomers are structurally similar to standard nitriles. However, they are hydrogenated to reduce the number of carbon-carbon double bonds. The hydrogenation process eliminates between 96% and 99.5% of the double bonds in the nitrile. Without hydrogenation, typical nitrile elastomers are about 88% saturated.

The nitrile elastomers are copolymers of acrylonitrile and butadiene. Their properties depend, among other things, on the ratio of the nitrile and diene. A relatively high acrylonitrile proportion is desirable in practice of this invention since increasing acrylonitrile content raises resistance to hydrocarbons, and increases tensile strength and abrasion resistance, all of which are important properties for an O-ring used in a rock bit. Preferably, the molecular proportion of acrylonitrile in the copolymer is more than 35% and more specifically in the range of from 35 to 50%.

As used herein, highly saturated nitrile refers to a nitrile elastomer wherein at least 96% of the double bonds have been eliminated. The removal of the carbon-carbon double bonds reduces the reaction of agents such as hydrocarbons, oxygen, hydrogen sulfide or ozone with the elastomer. Attack by such agents can reduce the tensile strength, elongation, and compression set resistance of the elastomer composition. Elimination of most of the double bonds results in an increased resistance to heat and down-hole chemicals, such as hydrocarbons in the bore and in lubricants, hydrogen sulfide and corrosion inhibitors.

Typically, HSN elastomers, when compared to standard nitriles, have improved properties with respect to increased abrasion resistance and heat resistance. HSN elastomers that may be used in the practice of the present invention are those such as Zetpol 2020, which is supplied by Zeon Chemicals, Inc. of Raleigh Meadow, Illinois, and Therban 2207S which is supplied by Mobay Corp., Pittsburgh, Pennsylvania. Typically, compounds such as Zetpol 2020 are 98% to 99% saturated and Therban 2207S is about 96.5% saturated.

The composition preferably includes high abrasion resistance furnace black (HAF) in the range of from 40 to 70 parts by weight. All parts by weight stated herein are parts relative to 100 parts of HSN. The furnace black not only enhances the abrasion resistance of the composition, it also increases tensile strength. A blend of a variety of furnace blacks may be used if desired, the tendency being to favor smaller particle size materials. Carbon blacks suitable for the O-ring composition include types N110, N231, N234, N330, N550 and N774. Vulcan 6LM available from Cabot Corporation, Boston, Massachusetts is an exemplary type N231 of furnace black useful in the O-ring composition. A suitable N774 type HAF furnace black is available from the J. M. Huber Corporation, New York, New York.

The HSN is cured with a peroxide curing agent instead of sulfur for better heat resistance. For example, a suitable curing agent is Vulcup 40KE which comprises 40% a,a'bis(t-butylperoxyl)diisopropyl benzene on a kaolin clay. Dicumyl (Dicup) is a suitable curing agent. A relatively high amount of curing agent is employed to assure that a highly cured state is achieved for high resistance to compression set. Preferably the amount of peroxide curing agent is in the range of from 7 to 10 parts per hundred parts HSN.

An exemplary curing cycle for an O-ring is 15 minutes at 175°C in the press followed by a post cure for four hours at 155°C. The O-ring is pressed from a precut ring of uncured composition in a conventional manner. If desired for longer life, one face of the die may be polished smooth, while the other face is slightly roughened. This produces an O-ring with one face rougher than the other. The rougher face is assembled on the grease side of the seal and the smoother face is assembled on the mud side of the seal. The rougher surface helps convey grease with the moving seal. The smoother surface entrains less of the abrasive particles.

Stearic acid, which is present in the range of from 0.5 to 2 parts per 100 parts of HSN. Stearic acid is preferably at the low side of this range for enhanced abrasion resistance. Stearic acid is used as an organic accelerator or activator for efficiency of curing of the polymer.

Zinc oxide, which is present in the range of from 4 to 7 parts per 100 parts HSN, and, when cured with peroxide, results in increased heat resistance. Preferably the zinc oxide is present at 5 parts per hundred. Magnesium oxide may be substituted for part or all of the zinc oxide.

In some embodiments tetrafluoroethylene (TFE) polymer may be added to the elastomer to provide the seal with a lower coefficient of friction and increased lubricity. TFE may be that commonly sold under the trade name Teflon, which is the name of compounds marketed by E.I. DuPont de Nemours Co., Inc. of Wilmington, DE. A particularly desirable TFE polymer has been found to be sold under the designation TL-126 by Liquid Nitrogen Processing Corporation, Malvern, Pennsylvania.

TFEs are recognized for their heat resistance and ability to reduce friction when used, for example, on the surface of kitchen utensils or for other mechanical applications. They have previously been used for enhanced lubricity in elastomer seals, but are not known to have been used in HSN compositions. The TFE materials are available in various forms. A common form of particular TFE is manufactured by grinding and fracturing large TFE particles into powdered, particulate TFE. It is preferred that the TFE is present up to 15 parts per hundred parts of HSN. This is equivalent to about 8% by weight.

While TFE results in a lower coefficient of friction and increased lubricity, the addition of TFE also results in alteration of other physical properties of the elastomer, such as compression set. Compression set is a measure of the permanent deformation of an elastomer after sitting under a given compression at a certain temperature for a specified period of time. Increased compression set values result in an O-ring seal which will permanently deform under pressure and which will lead to "pumping" of the lubricant through the O-ring seal. This would lead to loss of the lubricant or the introduction of dirt into the bearing. Either of these occurrences could lead to a failure of a rock bit. Retention of other physical properties may be more significant than enhanced lubricity.

To overcome the diminished properties that occur by the inclusion of TFE in the elastomer, a fatty acid amide may also be added. The fatty acid amides suitable for use in an O-ring composition are preferably higher-acid amides having from 6 to 30 carbon atoms. Particularly preferred are those having 15 to 25 carbon atoms. The higher fatty acids of these amides may be either saturated or unsaturated.

A particularly preferred fatty acid for practice of the present invention is a fatty acid monoamide derivative of erucic acid. This compound is 22 carbon atoms in length, with a double bond at C₁₃ to C₁₄, and has an average molecular weight of approximately 335. Such compounds are sold under the trade name Kenamine E by Homco Chemical Division, Witco Chemical Corp., Memphis, Tennessee. It is preferred that the Kenamine E be present in up to 7.5 parts per hundred parts HSN. This is equivalent to a concentration of about 4% by weight.

Among other components in the elastomer composition are antioxidants, plasticizers and processing aids. For example, a plasticizer and curing agent such as TP-95 available from Morton-Thiokol, Trenton, New Jersey, may be used. This comprises di(butyoxy-ethoxy-ethyl) adipate. Dioctyl phthalate is another of many suitable plasticizers which may be used. Plasticizers may be present up to 10 parts per 100 parts HSN.

A number of so-called processing aids may be included in the composition for better flow in the mixing and molding. These are usually fatty acid esters and may be present up to about 2.5 parts per 100 parts HSN. An exemplary processing aid is Struktol WB212.

A broad variety of conventional antioxidants may be used in the composition in conventional proportions. The antioxidants may be used up to about 3 parts per 100 parts HSN without degrading compression set. Suitable antioxidants include, for example, Vanox AM (a diphenyl amine-acetone reaction product) and Vanox ZMTI (zinc 2-mercaptotolylimidalole) from R. T. Vanderbilt & Co. Norwalk Connecticut, Naugard 445 (a substituted diphenyl amine) from Uniroyal Chemical, Naugatuck, Connecticut, Staugard 500 (a mixture of Naugard 445 and ZMTI).

A preferred composition of the O-ring in the rock bit can be summarized as follows:

| Material | Parts by Weight |
|---|---|
| HSN | 100 |
| Furnace black | 40 to 70 |
| Peroxide curing agent | 7 to 10 |
| Zinc oxide (or MgO) | 4 to 7 |
| Stearic acid | 0.5 to 2 |
| Tetrafluoroethylene polymer | 0 to 15 |
| Fatty acid amide | 0 to 8 |
| Plasticizers | 0 to 10 |
| Processing aids | 0 to 2.5 |
| Anti-oxidants | 0 to 3 |

The HSN preferably has at least 35% acrylonitrile groups in the polymer and is at least 96% saturated.

Various features and advantages of the O-ring seal composition are illustrated in the following examples. It is to be understood that these examples merely illustrate the invention and are not intended to limit the scope of the invention which is defined in the claims.

### Example 1

### Comparison of HSN Elastomers in the Presence and Absence of TFE and a Fatty Acid Amide

An elastomer in the absence of TFE and amide, designated as HSN-3P, was prepared to contain the following components at the indicated concentrations, by weight: Zetpol 2020 was added to 100.0 parts (59.4%), Vanox ZMTI was added to 1.5 parts (0.9%), Vanox AM to 1.5 parts (0.9%), stearic acid to 0.5 parts (0.3%), zinc oxide to 5.0 (3%), HAF N-330 to 50.0 parts (29.7%), and Vulcup 40KE to 10.0 parts (5.9%).

The elastomer in the presence of TFE and amide, designated as HSN-3Q, was prepared to contain the following components at the indicated concentrations, by weight: Zetpol 2020 was added to 100.0 parts (52.4%), Vanox ZMTI was added to 1.5 parts (0.8%), Vanox AM to 1.5 parts (0.8%), stearic acid to 0.5 parts (0.3%), zinc oxide to 5.0 (2.6%), HAF N-330 to 50.0 parts (26.2%), Vulcup 40KE to 10.0 parts (5.2%), TL-126 to 15.0 parts (7.8%) and Kenamine E to 7.5 parts (3.9%). Therefore, the HSN-3Q sample contained a total of 191.0 parts, while the HSN-3P sample contained a total of 168.5 parts.

The elastomers were cured to obtain high compression set resistance. The elastomers were cured with 7 to 10 parts peroxide, as compared to the 5 parts usually used for other nitrile elastomer compositions. Curing cycles were typically 152 minutes at 175°C, in a press. The elastomers were then post-cured for 4 hours at 155°C to complete the curing process.

The elastomers were tested for their durometer hardness (Shore A), tensile strength (psi), elongation (%), modulus of elasticity (psi) at 10, 20, 30, 40, 50 and 100% elongation, die C tear strength (lb/in), and compression set (a measure in percentage of the permanent deformation of an elastomer after sitting under a given compression at a certain temperature for a specified period of time). These physical properties were determined after aging the cured composition in air at 300°F for 70 hours, 350°F for 72 hours, 400°F for 30 minutes, and 450°F for 30 minutes. The results are set out below.

| HSN-3P | | | | | |
|---|---|---|---|---|---|
| | As cured | 300°F | 350°F | 400°F | 450°F |
| Hardness | 79 | 81 | 88 | 80 | 80 |
| Tensile | 4812 | 5064 | 2669 | 5142 | 4520 |
| Elongation | 204 | 148 | 62 | 216 | 191 |
| Modulus 10% | 158 | 266 | 408 | 165 | 193 |
| 20% | 248 | 422 | 691 | 255 | 284 |
| 30% | 321 | 586 | 1042 | 329 | 370 |
| 40% | 405 | 807 | 1466 | 415 | 473 |
| 50% | 512 | 1073 | 1978 | 531 | 602 |
| 100% | 1510 | 3197 | - | 1679 | 1772 |
| 200% | - | - | - | 4750 | - |
| Tear | 199 | - | - | - | - |

| Compression Set as cured: | | | | | |
|---|---|---|---|---|---|
| 70 hr. @ 100°C | | 6.0% | | | |
| 22 hr. @ 150°C | | 7.2% | | | |

| HSN-3Q | | | | | |
|---|---|---|---|---|---|
| | | 300°F | 350°F | 400 ° | 450°F |
| Hardness | 78 | 83 | 90 | 78 | 78 |
| Tensile | 4296 | 4508 | 2336 | 4501 | 3921 |
| Elongation | 242 | 276 | 70 | 296 | 252 |
| Modulus 10% | 164 | 276 | 450 | 178 | 186 |
| 20% | 240 | 402 | 667 | 250 | 271 |
| 30% | 292 | 514 | 915 | 303 | 332 |
| 40% | 342 | 643 | 1217 | 357 | 388 |
| 50% | 396 | 798 | 1217 | 410 | 459 |
| 100% | 990 | 250 | - | 986 | 1040 |
| 200% | - | - | - | 2984 | 3014 |
| Tear | 266 | - | - | - | - |

| Compression Set as cured: | | | | | |
|---|---|---|---|---|---|
| 70 hr. @ 100°C | | 8.8% | | | |
| 22 hr. @ 150°C | | 9.4% | | | |

### Example 2

A composition was made with 100 parts by weight of Zetpol 2020 highly saturated nitrile elastomer, 70 parts N774 furnace black, 7 parts Vulcup 40KE peroxide curing agent, 5 parts zinc oxide, 1 part stearic acid, 1.1 parts Naugard 445 antioxidant, 0.4 parts ZMTI antioxidant, 5 parts TP95 plasticizer, and 2 parts Struktol WB212 processing aid. The composition was cured for 15 minutes in the press at 175°C and post cured for 4 hours at 155°C.

The tensile strength to breakage was 3600 psi. Durometer hardness was Shore A 79. The modulus of elasticity at 100% elongation was 1240 psi. Elongation to breakage was 232%. Die C tear strength was 295 lb/in. Compression set after 70 hours at 100°C was 8%.

### Example 3

A composition was made with 100 parts by weight of Zetpol 2020 highly saturated nitrile elastomer, 40 parts Vulcan 6LM furnace black, 10 parts Vulcup 40KE peroxide curing agent, 5 parts zinc oxide, 0.5 part stearic acid, 1.1 parts Naugard 445 antioxidant, and 0.4 parts ZMTI antioxidant. The composition was cured for 15 minutes in the press at 175°C and post cured for 4 hours at 155°C.

The tensile strength to breakage was 4400 psi. Durometer hardness was Shore A 80. The modulus of elasticity at 100% elongation was 1000 psi. Elongation to breakage was 200%. Die C tear strength was 300 lb/in. Compression set after 70 hours at 100°C was 11%. The composition had better abrasion resistance than the composition of Example 2. It was harder to process than the composition of Example 2; it was stiffer and didn't flow as well in processing.

### Example 4

In another exemplary embodiment the O-ring composition has 50 parts type GPF N330 furnace black per 100 parts Zetpol 2020 HSN, 10 parts Vulcup 40KE peroxide curing agent, 10 parts di(butyoxy-ethoxy-ethyl) adipate plasticizer, 5 parts zinc oxide, 1.5 parts Vanox ZMTI, 1.5 parts Vanox AM and 0.5 parts stearic acid.

The durometer hardness of this composition was Shore A 75. Tensile strength was 4439 psi. Elongation was 262%. Modulus of elasticity ranged from 147 psi at 10% to 1037 psi at 100% elongation. Die C tear strength was 293 lb/in.

### Example 5

In another exemplary embodiment the O-ring composition has 50 parts type GPF N660 furnace black per 100 parts Zetpol 2020 HSN, 20 parts type MT N990 furnace black, 10 parts Vulcup 40KE peroxide curing agent, 10 parts di(butyoxy-ethoxy-ethyl) dipate plasticizer, 5 parts Cumar P-25 (a coumarone-indine resin available from Allied Chemical Corp., Morristown, New Jersey), 5 parts zinc oxide, 1.5 parts Vanox ZMTI, 1.5 parts Vanox AM and 0.5 parts stearic acid.

The durometer hardness of this composition was Shore A 75. Tensile strength was 3422 psi. Elongation was 294%. Modulus of elasticity ranged from 133 psi at 10% to 1090 psi at 100% elongation. Die C tear strength was 278 lb/in.

### Example 6

A composition was made with 100 parts by weight of Therban 2207S highly saturated nitrile elastomer, 40 parts Vulcan 6LM furnace black, 10 parts Vulcup 40KE peroxide curing agent, 5 parts zinc oxide, 0.5 part stearic acid, 1.1 parts Naugard 445 antioxidant, 0.4 parts ZMTI antioxidant, and 4 parts 1,2-polybutadiene accelerator coagent Ricon 153D available from Colorado Chemical, Golden, Colorado. The composition was cured for 15 minutes in the press at 175°C and post cured for 4 hours at 155°C.

The tensile strength to breakage was 3750 psi. Durometer hardness was Shore A 80. The modulus of elasticity at 100% elongation was 1050 psi. Elongation to breakage was 270%. Die C tear strength was 270 lb/in. Compression set after 70 hours at 100°C was 14%.

### Example 7

A prior embodiment for a "standard" O-ring composition for a rock bit had 50 parts of Hycar 1041 and 50 parts of Hycar 1042 nitrile elastomer (not HSN) from B. F. Goodrich Chemical Co., Cleveland, Ohio, 70 parts of type GPF N660 furnace black per 100 parts of the nitrile elastomer, 20 parts type MT N990 furnace black, 50 parts Vulcup 40KE peroxide curing agent, 0.5 parts of sulfur, 5 parts zinc oxide, 0.5 parts stearic acid, 10 parts of dibutyl phthalate, 2 parts of benzothiazyl disulfide, 1.5 parts of tetramethylthiuram disulfide, 1.5 parts of tetraethylthiuram disulfide, 2 parts of Agerite antioxidant (B.F. Goodrich Chemical Co.) and 2 parts of Flexzone 3C antioxidant (Uniroyal Chemical Co.).

The durometer hardness of this composition was Shore A 78. Tensile strength was 2528 psi. Elongation was 246%. Compression set was 8.3% after 70 hours at 100°C and 21.6% after 22 hours at 150°C.

The properties of compositions provided in practice of this invention are superior to this standard composition for an O-ring for a rock bit. The tensile strength is as much as 80% greater. The new compositions provide 40% greater wear resistance and 20% greater temperature capability as compared with the conventional nitrile seals. These properties make the O-ring seal capable of running at higher speeds and temperatures.

Among the desired properties of the O-ring seal are a low modulus of elasticity and low compression set. The ranges that are considered acceptable for these properties are a modulus of elasticity at 100% elongation of 700 to 1200 psi and a compression set after 70 hours at 100°C hours of no more than 16%. In addition, it is desirable that the O-ring seal have a minimum tensile of 3000 psi, elongation at failure of from 200 to 350%, and a durometer hardness of Shore A from 74 to 80.

## Claims

1. A rock bit for drilling subterranean formations comprising:
a bit body (10) including a plurality of journal pins (16), each having a bearing nose (19);
a cutter cone (11) mounted on each journal pin (16) and including bearing surfaces (21, 23);
a pressure-compensated grease reservoir (29) in communication with such bearing surfaces; and
an O-ring seal (33) for retaining the grease in the bearing;
characterized in that the O-ring seal (33) comprises
100 parts by weight of highly-saturated nitrile elastomer, being at least 96% saturated;
furnace black in the range of from 40 to 70 parts by weight;
peroxide curing agent in the range of from 7 to 10 parts by weight;
zinc oxide or magnesium oxide in the range of from 4 to 7 parts by weight;
stearic acid in the range of from 0.5 to 2 parts by weight;
tetrafluoroethylene particles in the range of from 0 to 15 parts by weight; and
a fatty acid amide selected from the group containing saturated or unsaturated fatty acid amides 15 to 25 carbon atoms in length in the range of from 0 to 8 parts by weight.

2. A rock bit as recited in claim 1 wherein the highly-saturated nitrile has at least 35% acrylonitrile groups in the polymer.

3. A rock bit as recited in any one of the preceding claims wherein the fatty acid amide is a monoamide derivative of erucic acid.

4. A rock bit as recited in any one of the preceding claims wherein the tetrafluoroethylene is present at 15 parts by weight.

5. A method for lubricating a rock bit for drilling subterranean formations, the rock bit including a bit body (10) and a plurality of cutter cones (11) mounted on the bit body (10) through journal pins (16), comprising the steps of:
evacuating the space of the rock bit body (10) including the journal pins (16);
introducing grease into the evacuated space of the rock bit body (10) and journal pins (16); and
retaining the grease with an O-ring seal (33);
characterized by using an O-ring seal comprising:
100 parts by weight of highly-saturated nitrile elastomer, being at least 96% saturated;
furnace black in the range of from 40 to 70 parts by weight;
peroxide curing agent in the range of from 7 to 10 parts by weight;
zinc oxide or magnesium oxide in the range of from 4 to 7 parts by weight;
stearic acid in the range of from 0.5 to 2 parts by weight;
tetrafluoroethylene particles in the range of from 0 to 15 parts by weight; and
a fatty acid amide selected from the group containing saturated or unsaturated fatty acid amides 15 to 25 carbon atoms in length in the range of from 0 to 8 parts by weight.

6. A method as recited in claim 5 wherein the tetrafluoroethylene is present at 15 parts by weight.

7. A method as recited in claim 5 or 6 wherein the fatty acid amide is present at 8 parts by weight.

8. A method as recited in claims 5 through 7 wherein the fatty acid amide is a monoamide derivative of erucic acid.

## Patentansprüche

1. Gesteinsbohrmeissel zum Bohren in unterirdischen Formationen, welcher folgendes umfaßt:
einen Bohrmeisselkörper (10), welcher eine Vielzahl an Lagerzapfen (16), von denen jeder eine Lagernase (17) besitzt, einschließt;
einen auf jedem Lagerzapfen (16) montierten Schneidenkegel (11), welcher Lagerflächen (21, 23) einschließt;
ein druckausgeglichenes Schmiermittelreservoir (29), welches in Verbindung mit den Lagerflächen steht; und
eine O-Ring-Dichtung (33) zum Einbehalten des Schmiermittels im Lager;
dadurch gekennzeichnet, daß die O-Ring-Dichtung (33) folgendes umfaßt:
100 Gewichtsteile eines in hohem Maße gesättigten Nitril-Elastomeren, welches zu mindestens 96% gesättigt ist;
Ofenruß im Bereich von 40 bis 70 Gewichtsteilen;
ein Peroxid-Härtungsmittel im Bereich von 7 bis 10 Gewichtsteilen;
Zinkoxid oder Magnesiumoxid im Bereich von 4 bis 7 Gewichtsteilen;
Stearinsäure im Bereich von 0,5 bis 2 Gewichtsteilen;
Tetrafluorethylenteilchen im Bereich von 0 bis 15 Gewichtsteilen; und
ein Fettsäureamid, welches aus der gesättigte oder ungesättigte Fettsäureamide mit einer Länge von 15 bis 25 Kohlenstoffatomen enthaltenden Gruppe ausgewählt ist, im Bereich von 0 bis 8 Gewichtsteilen.

2. Gesteinsbohrmeissel gemäß Anspruch 1, wobei das in hohem Maß gesättigte Nitril mindestens 35% an Acrylnitrilgruppen im Polymer besitzt.

3. Gesteinsbohrmeissel gemäß einem der vorhergehenden Ansprüche, wobei das Fettsäureamid ein Monoamidderivat der Erucasäure ist.

4. Gesteinsbohrmeissel gemäß einem der vorhergehenden Ansprüche, wobei das Tetrafluorethylen mit 15 Gewichtsteilen vorhanden ist.

5. Verfahren zum Schmieren eines Gesteinsbohrmeissels zum Bohren in unterirdischen Formationen, wobei der Gesteinsbohrmeissel einen Bohrmeisselkörper (10) und eine Vielzahl an Schneidenkegeln (11), welche über Lagerzapfen (16) am Bohrmeisselkörper (10) montiert sind, einschließt, welches Verfahren die folgenden Schritte umfaßt:
Evakuieren des Zwischenraums des Gesteinsbohrmeisselkörpers (10), welcher die Lagerzapfen (16) einschließt;
Hineingeben von Schmiermittel in den evakuierten Zwischenraum des Gesteinsbohrmeisselkörpers (10) und der Lagerzapfen (16); und
Einbehalten des Schmiermittels mit einer O-Ring-Dichtung (33);
dadurch gekennzeichnet, daß eine O-Ring-Dichtung verwendet wird, welche folgendes umfaßt:
100 Gewichtsteile eines in hohem Maße gesättigten Nitril-Elastomeren, welches zu mindestens 96% gesättigt ist;
Ofenruß im Bereich von 40 bis 70 Gewichtsteilen;
ein Peroxid-Härtungsmittel im Bereich von 7 bis 10 Gewichtsteilen;
Zinkoxid oder Magnesiumoxid im Bereich von 4 bis 7 Gewichtsteilen;
Stearinsäure im Bereich von 0,5 bis 2 Gewichtsteilen;
Tetrafluorethylenteilchen im Bereich von 0 bis 15 Gewichtsteilen; und
ein Fettsäureamid, welches aus der gesättigte oder ungesättigte Fettsäureamide mit einer Länge von 15 bis 25 Kohlenstoffatomen enthaltenden Gruppe ausgewählt ist, im Bereich von 0 bis 8 Gewichtsteilen.

6. Verfahren gemäß Anspruch 5, wobei das Tetrafluorethylen mit 15 Gewichtsteilen vorhanden ist.

7. Verfahren gemäß Anspruch 5 oder 6, wobei das Fettsäureamid mit 8 Gewichtsteilen vorhanden ist.

8. Verfahren gemäß den Ansprüchen 5 bis 7, wobei das Fettsäureamid ein Monoamidderivat der Erucasäure ist.

## Revendications

1. Un trépan à molette, pour le forage de formations souteiTaines, comprenant :
un corps de trépan (10) comprenant une pluralité de tiges de tourillonnement (16) ayant chacune un nez de palier (19);
un cône de découpe (11), monté sur chaque tige de tourillonnement (16) et comprenant une surface de portée (21, 23) ;
un réservoir à graisse (29) à compensation de pression, mis en communication avec les surfaces de portée et ;
un joint d'étanchéité torique (33) destiné à retenir la graisse dans le palier ;
caractérisé en ce que
le joint torique d'étanchéité (33) comprend :
100 parties en poids d'un élastomère de type nitrile fortement saturé, la saturation étant d'au moins 96% ;
du noir de pétrole, dans une proportion située dans la plage allant de 40 à 70 parties en poids ;
un agent de durcissement de type peroxyde situé en une proportion comprise dans la plage de 7 à 10 parties en poids ;
de l'oxyde de zinc ou de l'oxyde de magnésium, en une proportion comprise dans la plage allant de 4 à 7 parties en poids ;
de l'acide stéarique, dans une proportion comprise dans la plage allant de 0, 5 à 2 parties en poids ;
des particules de tétrafluoréthylène, en une proportion comprise dans la plage allant de 0 à 15 parties en poids ; et
un amide d'acide gras, choisi dans le groupe composé des amides d'acides gras saturés ou non saturés, ayant une chaîne comprenant de 15 à 25 atomes de carbone, en une proportion comprise dans la plage allant de 0 à 8 parties en poids.

2. Un trépan à molette selon la revendication 1, dans lequel le nitrile fortement saturé comporte au moins 35 % de groupes acrylonitriles dans le polymère.

3. Un trépan à molette selon l'une quelconque des revendications précédentes, dans lequel l'amide d'acide gras est un dérivé monoamide de l'acide érucique.

4. Un trépan à molette selon l'une quelconque des revendications précédentes, dans lequel le tétrafluoréthylène est présent en une proportion de 15 parties en poids.

5. Un procédé de lubrification d'un trépan à molette pour forer des formations souterraines, le trépan à molette comprenant un corps de trépan (10), une pluralité de cônes de découpage (11) montés sur le corps de trépan (10), par l'intermédiaire de tiges de tourillonnement (16), comprenant les étapes consistant à :
évacuer l'espace du corps de trépan à molette (10) comprenant les tiges de tourillonnement (16) ;
introduire de la graisse dans l'espace ayant été évacué du corps de trépan à molette (10) et des tiges de tourillonnement (16) et
retenir la graisse au moyen d'un joint d'étanchéité torique (33), caractérisé par l'utilisation d'un joint d'étanchéité torique comprenant :
100 parties en poids d'un élastomère de type nitrile fortement saturé, la saturation étant d'au moins 96 %;
du noir de pétrole, dans une proportion située dans la plage allant de 40 à 70 parties en poids ;
un agent de durcissement de type peroxyde situé en une proportion comprise dans la plage de 7 à 10 parties en poids ;
de l'oxyde de zinc ou de l'oxyde de magnésium, en une proportion comprise dans la plage allant de 4 à 7 parties en poids ;
de l'acide stéarique, dans une proportion comprise dans la plage allant de 0, 5 à 2 parties en poids ;
des particules de tétrafluoréthylène, en une proportion comprise dans la plage allant de 0 à 15 parties en poids ; et
un amide d'acide gras choisi dans le groupe composé des amides d'acides gras saturés ou non saturés ayant une chaîne comprenant de 15 à 25 atomes de carbone, en une proportion comprise dans la plage allant de 0 à 8 parties en poids.

6. Un procédé selon la revendication 5, dans lequel le tétrafluoréthylène est présent en une proportion de 15 parties en poids.

7. Un procédé selon la revendication 5 ou la revendication 6, dans lequel l'amide d'acide gras est présent à raison de 8 parties en poids.

8. Un procédé selon les revendications 5 à 7, dans lequel l'amide d'acide gras est un dérivé monoamide de l'acide érucique.
